# EUROPÄISCHE PATENTANMELDUNG

(11) **EP 4 478 525 A1**
(43) Veröffentlichungstag der Anmeldung: **18.12.2024**
(21) Anmeldenummer: 23179158.3
(22) Anmeldetag: 14.06.2023
(51) Int. Cl.: H01M 50/583, H01M 50/503, H01M 50/581, H01M 50/247

(54) **BATTERIEPACK, SYSTEM UND VERFAHREN**

(71) Anmelder: Andreas Stihl AG & Co. KG, 71336 Waiblingen (DE)
(72) Erfinder: Sauerteig, Daniel, 71394 Kernen im Remstal (DE); Kolb, Joachim, 71638 Ludwigsburg (DE)
(74) Vertreter: Patentanwälte Ruff, Wilhelm, Beier, Dauster & Partner mbB

(57) **Zusammenfassung**

Die Erfindung betrifft einen Batteriepack (1) für ein Batteriegerät (50), wobei der Batteriepack (1) aufweist: ein Batteriezellpaket (2), eine Anschlusseinrichtung (3) und wenigstens eine elektrische Stromschieneneinheit (4), die das Batteriezellpaket (2) elektrisch mit der Anschlusseinrichtung (3) verbindet, wobei die Stromschieneneinheit (4) einen elektrisch leitfähigen Kernkörper (5) sowie einen elektrisch isolierenden Stabilisierungskörper (6) mit oder aus elektrisch isolierendem Material aufweist, wobei der Kernkörper (5) einen der Anschlusseinrichtung (3) zugewandten ersten Einbettungsabschnitt (7) und einen von dem ersten Einbettungsabschnitt (7) abgewandten zweiten Einbettungsabschnitt (8) aufweist, wobei der Kernkörper (5) einen relativ zu den beiden Einbettungsabschnitten (7, 8) querschnittreduzierten Schmelzsicherungsabschnitt (9) aufweist, durch den die beiden Einbettungsabschnitte (7, 8) miteinander elektrisch und mechanisch verbunden sind, wobei die beiden Einbettungsabschnitte (7, 8) jeweils in dem elektrisch isolierenden Material des Stabilisierungskörpers (6) eingebettet sind, und wobei der Stabilisierungskörper (6) wenigstens einen Brückenabschnitt (10) aufweist, der in einem Abstand (A) von dem Schmelzsicherungsabschnitt (9) zwischen den beiden Einbettungsabschnitten (7, 8) erstreckt ist, um die beiden eingebetteten Einbettungsabschnitte (7, 8) zusätzlich zu ihrer Verbindung durch den Schmelzsicherungsabschnitt (9) mechanisch gegeneinander abzustützen.

## Beschreibung

### ANWENDUNGSGEBIET UND STAND DER TECHNIK

Die Erfindung betrifft einen Batteriepack für ein Batteriegerät, insbesondere Bearbeitungsgerät oder Ladegerät oder Adaptergerät oder Batterietransportgerät. Die Erfindung betrifft zudem ein System mit einem derartigen Batteriegerät und mit einem derartigen Batteriepack. Ferner betrifft die Erfindung ein Verfahren zum Herstellen einer Stromschieneneinheit für einen derartigen Batteriepack.

### AUFGABE UND LÖSUNG

Es ist eine Aufgabe der Erfindung, einen Batteriepack für ein Batteriegerät, insbesondere Bearbeitungsgerät oder Ladegerät oder Adaptergerät oder Batterietransportgerät, sowie ein System mit einem derartigen Batteriegerät und mit einem derartigen Batteriepack sowie ein Verfahren zum Herstellen einer Stromschieneneinheit für einen derartigen Batteriepack zu schaffen, welche verbesserte Eigenschaften aufweisen.

Diese Aufgabe wird durch die Gegenstände der unabhängigen Patentansprüche gelöst. Bevorzugte Ausführungsformen sind Gegenstand der abhängigen Patentansprüche.

Ein erfindungsgemäßer Batteriepack ist zur gemeinsamen Verwendung mit einem Batteriegerät, insbesondere Bearbeitungsgerät oder Ladegerät oder Adaptergerät oder Batterietransportgerät, vorgesehen. Das Batteriegerät kann, insbesondere wenn es sich um ein Bearbeitungsgerät handelt, mittels Energie aus dem Batteriepack elektrisch betrieben werden. Entsprechend kann das Batteriegerät synonym als batteriebetreibbares oder als batteriebetriebenes Gerät bezeichnet werden. Dabei weist der Batteriepack ein Batteriezellpaket zum Speichern elektrischer Energie auf. Der Batteriepack hat außerdem eine Anschlusseinrichtung zum elektrischen Anschließen des Batteriepacks an das Batteriegerät. Ferner weist der Batteriepack wenigstens eine, beispielsweise genau eine oder mehr als eine, elektrische Stromschieneneinheit auf, welche das Batteriezellpaket elektrisch mit der Anschlusseinrichtung verbindet. Dabei weist die Stromschieneneinheit einen elektrisch leitfähigen Kernkörper sowie einen elektrisch isolierenden Stabilisierungskörper auf, wobei der elektrisch isolierende Stabilisierungskörper ein elektrisch isolierendes Material aufweist oder aus einem solchen elektrisch isolierenden Material besteht. Der Kernkörper weist einen der Anschlusseinrichtung zugewandten ersten Einbettungsabschnitt sowie einen von dem ersten Einbettungsabschnitt abgewandten zweiten Einbettungsabschnitt auf. Ferner weist der Kernkörper einen relativ zu den beiden Einbettungsabschnitten querschnittreduzierten, insbesondere integralen, Schmelzsicherungsabschnitt auf. Durch den Schmelzsicherungsabschnitt sind die beiden Einbettungsabschnitte elektrisch und mechanisch, d. h. insbesondere körperlich, miteinander verbunden. Die beiden Einbettungsabschnitte sind jeweils in dem elektrisch isolierenden Material des Stabilisierungskörpers eingebettet. "Eingebettet" kann in diesem Zusammenhang bedeuten, dass die Einbettungsabschnitte in dem elektrisch isolierenden Material entlang einer Umfangsrichtung der Stromschieneneinheit vollständig umgeben sind. Der Stabilisierungskörper weist außerdem wenigstens einen Brückenabschnitt auf, der in einem Abstand von dem Schmelzsicherungsabschnitt zwischen den beiden Einbettungsabschnitten erstreckt ist. Mittels des Brückenabschnitts sind die beiden eingebetteten Einbettungsabschnitte zusätzlich zu ihrer Verbindung durch den Schmelzsicherungsabschnitt mechanisch, d. h. insbesondere körperlich, gegeneinander abgestützt. Vorteilhaft erweist sich die Stromschieneneinheit trotz des verjüngten Schmelzsicherungsabschnitts als mechanisch besonders stabil, was eine Montage des erfindungsgemäßen Batteriepacks vereinfachen kann.

Die elektrische Stromschieneneinheit kann mittels eines öffnungsfähigen elektronischen Leistungsschalters des Batteriepacks mit dem Batteriezellpaket elektrisch verbunden sein. Der Leistungsschalter kann Bestandteil einer Leistungselektronik des Batteriepacks sein. Die eingebetteten Einbettungsabschnitte können in unmittelbarer, d.h. direkter, Berührung mit dem Material des Stabilisierungskörpers stehen. Entsprechend kann der Stabilisierungskörper an den Einbettungsabschnitten unmittelbar bzw. direkt angelegt sein. Insbesondere sind der Stabilisierungskörper und die Einbettungsabschnitte adhäsiv und/oder formschlüssig miteinander verbunden. Der Schmelzsicherungsabschnitt kann eine Sollbruchstelle des Kernkörpers zum selbsttätigen Unterbrechen eines durch den Kernkörper ausgebildeten elektrischen Leitungspfads bei Überlast ausbilden. Insbesondere ist der Schmelzsicherungsabschnitt zur selbsttätigen Unterbrechung des Leitungspfads bei einer elektrischen Stromstärke von 100 A (Ampere) bis 2.000 A, insbesondere von etwa 150 A, ausgebildet. Der Kernkörper kann abseits seines Schmelzsicherungsabschnitts, insbesondere in den Einbettungsabschnitten, einen Leitungsquerschnitt aufweisen, der größer ist als der Leitungsquerschnitt im Schmelzsicherungsabschnitt. Der Leitungsquerschnitt kann im Schmelzsicherungsabschnitt auf ein 0,05- bis 0,5-Faches, insbesondere auf ein 0,1-Faches, des außerhalb oder abseits des Schmelzsicherungsabschnitts engsten Leitungsquerschnitts des Kernkörpers reduziert, insbesondere verjüngt, sein. Der außerhalb des Schmelzsicherungsabschnitts engste Leitungsquerschnitt des Kernkörpers kann 2,4 mm² (Quadratmillimeter) bis 30 mm², insbesondere 10 mm², betragen.

Zweckmäßig ist der Batteriepack wiederaufladbar oder nicht wiederaufladbar ausgebildet. Falls der Batteriepack wiederaufladbar ausgebildet ist, kann es sich bei dem Batteriepack um einen Akkupack handeln. In diesem Fall kann das Batteriezellpaket ein Akkuzellpaket sein.

Das als Bearbeitungsgerät ausgebildete Akkugerät kann boden- und/oder handgeführt, insbesondere handgetragen, und/oder rückengetragen und/oder ein Garten-, Forst-, Boden- und/oder Baubearbeitungsgerät sein. Insbesondere kann das Bearbeitungsgerät eine Säge, insbesondere eine Kettensäge, oder ein Hoch-Entaster, oder eine Heckenschere, oder ein Heckenschneider, oder ein Gehölzschneider, oder eine Astschere, ein Trennschleifer oder ein Blasgerät, oder ein Laubbläser, oder ein Sauggerät, oder ein Laubsauger, oder ein Reinigungsgerät, oder ein Hochdruckreiniger, oder ein Kehrgerät, oder eine Kehrwalze, oder eine Kehrbürste, oder ein Rasenmäher, oder eine Grasschere, oder ein Freischneider, oder ein Vertikutierer sein. Zusätzlich oder alternativ kann das Bearbeitungsgerät ein Bearbeitungswerkzeug und/oder einen, insbesondere elektrischen, Antriebsmotor, insbesondere zum Antrieb des Bearbeitungswerkzeugs, aufweisen.

Der Antriebsmotor kann mit elektrischer Energie aus dem Batteriepack versorgbar sein.

Das als Ladegerät ausgebildete elektrische Gerät kann einen Netzanschluss zum elektrischen Anschließen an eine elektrische Energiequelle, beispielsweise an ein elektrisches Versorgungsnetz, aufweisen. Das Ladegerät kann dazu dienen, den Batteriepack mit elektrischer Energie aufzuladen.

Das als Adaptergerät ausgebildete Batteriegerät kann zur Aufnahme des Batteriepacks ausgebildet sein. Dabei kann das Adaptergerät selbst mit einem übergeordneten Batteriegerät verbunden werden, so dass der Batteriepack mittels des Adaptergeräts mit dem übergeordneten Batteriegerät elektrisch verbunden wird. Das Adaptergerät kann insofern als Batterieadapter zur tauschbaren mechanischen und/oder elektrischen Kopplung des Batteriepacks mit dem übergeordneten Batteriegerät fungieren.

Das als Batterietransportgerät ausgebildete Batteriegerät kann zum Transportieren des Batteriepacks ausgebildet sein. Das Batterietransportgerät kann zur, insbesondere lösbaren, elektrischen Verbindung eines elektrischen Verbrauchers mit einem von dem Batterietransportgerät aufgenommenen Batteriepack eingerichtet sein. In diesem Fall kann das Batterietransportgerät wenigstens einen elektrischen Ausgangsanschluss zum Anschließen eines elektrischen Verbrauchers aufweisen, wobei der Ausgangsanschluss elektrisch mit dem aufgenommenen Batteriepack verbindbar oder verbunden ist, um den angeschlossenen Verbraucher mit elektrischer Energie aus dem Batteriepack zu versorgen. Alternativ kann das Batterietransportgerät dazu eingerichtet sein, den aufgenommenen Batteriepack elektrisch zu isolieren.

Das, insbesondere als Bearbeitungsgerät oder Ladegerät oder Adaptergerät oder Batterietransportgerät ausgebildete, Batteriegerät kann rückengetragen ausgebildet sein. Wenn das Batteriegerät rückengetragen ausgebildet ist, kann wenigstens eine Aufnahmeeinrichtung des Batteriegeräts zur Aufnahme des Batteriepacks dazu eingerichtet sein, von einem Benutzer rückenseitig getragen zu werden. Zu diesem Zweck kann das Batteriegerät ein Geschirr umfassen, welches zum Tragen der Aufnahmeeinrichtung durch einen Benutzer ausgebildet ist. Das Geschirr kann wenigstens einen Schultergurt und/oder Beckengurt und/oder Brustgurt aufweisen.

Der Batteriepack kann zur, insbesondere werkzeugfreien und/oder zerstörungsfreien, benutzerlösbaren mechanischen Verbindung mit dem Batteriegerät und/oder benutzeraustauschbar bzw. benutzerentnehmbar ausgebildet sein, insbesondere von bzw. aus dem Batteriegerät. Insbesondere kann der Batteriepack zum Tragen durch das Batteriegerät ausgebildet sein. Das Batteriezellpaket kann mehrere Batteriezellen aufweisen. Insbesondere können die Batteriezellen in einem Packgehäuse des Batteriepacks angeordnet sein. Zusätzlich oder alternativ können die Batteriezellen Speicherelemente für elektrische Energie auf elektrochemischer Basis sein. Weiter zusätzlich oder alternativ können die Batteriezellen Lithium-Ionen-Akkumulatorzellen sein. Weiter zusätzlich oder alternativ können die Batteriezellen gleich, insbesondere typ- und/oder baugleich, sein. Weiter zusätzlich oder alternativ kann eine, insbesondere jeweilige, Zell-Spannung, insbesondere Zell-Nennspannung, einer, insbesondere jeweiligen, der Batteriezellen minimal 2 V (Volt), insbesondere minimal 3,6 V, und/oder maximal 5 V, insbesondere maximal 4,2 V, sein. Weiter zusätzlich oder alternativ können die Batteriezellen Rundzellen, prismatische Zellen oder Pouch-Zellen sein. Die Batteriezellen können zur Versorgung des Batteriegeräts mit elektrischer Antriebsleistung ausgebildet und/oder mittels des Batteriegeräts mit elektrischer Ladeleistung versorgbar sein.

Der Betriff "konfiguriert" kann für den Begriff "ausgebildet" synonym verwendet werden.

Der Begriff "umfasst" oder "hat" kann für den Begriff "aufweist" synonym verwendet werden.

"Angeordnet" kann räumlich und/oder fest, insbesondere ortsfest, angeordnet, insbesondere befestigt, sein. Zusätzlich oder alternativ kann der Begriff "positioniert" für den Begriff "angeordnet" synonym verwendet werden.

In Ausgestaltung der Erfindung liegt ein elektrisch leitfähiges Material des Kernkörpers an seinem Schmelzsicherungsabschnitt blank vor. Dabei ist der Kernkörper insbesondere als Blechteil ausgebildet, insbesondere wobei sein Material ein Kupferblech ist oder aufweist. Der Kernkörper kann also Kupferblech umfassen oder aus Kupferblech bestehen. "Blank" kann im vorliegenden Zusammenhang bedeuten, dass keine Berührung mit einem anderen Körper, insbesondere keine Berührung mit dem Stabilisierungskörper, vorliegt. Das Kupferblech kann eine Kupferlegierung umfassen oder aus einer solchen Kupferlegierung bestehen. Die Kupferlegierung kann wenigstens 50 Gew.-% (Gewichtsprozent) Cu aufweisen. Das Kupferblech kann verzinnt sein.

Zweckmäßig entspricht ein Querschnitt des Kernkörpers außerhalb des Schmelzsicherungsabschnitts im Wesentlichen einem Rechteck mit einer ersten Seitenlänge von 0,3 mm (Millimeter) bis 1,0 mm und einer zweiten Seitenlänge von 8 mm bis 30 mm. Ein Aspektverhältnis des Rechtecks kann 3 bis 4 betragen.

In weiterer Ausgestaltung der Erfindung ist der Kernkörper von seinem ersten Einbettungsabschnitt zu seinem zweiten Einbettungsabschnitt entlang einer Längsrichtung der Stromschieneneinheit längserstreckt. Dabei ist der Kernkörper quer zu der Längsrichtung entlang einer Breitenrichtung der Stromschieneneinheit quer erstreckt. Der Kernkörper weist senkrecht zur Längsrichtung und senkrecht zur Breitenrichtung eine, insbesondere einheitliche, Kerndicke auf. Insbesondere beträgt die Kerndicke 0,3 mm bis 1,0 mm, insbesondere 0,5 mm.

Auf diese Weise lässt sich ein ausreichend großer Leitungsquerschnitt bereitstellen, bei zugleich ausreichend flacher Bauweise der Stromschieneneinheit.

In weiterer Ausgestaltung der Erfindung ist die Stromschieneneinheit wenigstens bereichsweise flächig und/oder ebenförmig ausgebildet und wenigstens bereichsweise an das Batteriezellpaket angelegt. Vorteilhaft ergibt sich so ein besonders kompakt bauender Batteriepack.

Zweckmäßig weist der Batteriepack eine im Wesentlichen zylindrische, insbesondere prismatische, insbesondere quaderförmige, Formgebung auf. Dabei kann die Längsrichtung von einer runden oder vieleckförmigen Unterseite zu einer der Unterseite gegenüberliegenden Oberseite des Batteriepacks erstreckt sein. Die Unterseite und/oder die Oberseite können beispielsweise dreieckförmig oder rechteckförmig oder oktogonal ausgebildet sein. Eine maximale Breite der Stromschieneneinheit ist insbesondere kleiner als die Breite einer Seite des Batteriezellpakets, an welcher die Stromschieneneinheit angeordnet ist.

In weiterer Ausgestaltung der Erfindung weist der Stabilisierungskörper senkrecht zur Längsrichtung und senkrecht zur Breitenrichtung eine Dicke auf. Dabei ist die Dicke 1-mal bis 5-mal, insbesondere 3-mal, so groß wie die Kerndicke. Eine Schichtdicke des Materials des Stabilisierungskörpers kann an den Einbettungsabschnitten des Kernkörpers betragsmäßig in etwa gleich der Kerndicke sein. Die Dicke entspricht im Brückenabschnitt einer Materialstärke und setzt sich in den Einbettungsabschnitten zusammen aus der Kerndicke sowie der doppelten Schichtdicke.

In weiterer Ausgestaltung der Erfindung weist der Stabilisierungskörper zwei Brückenabschnitte auf, die einander entlang der Breitenrichtung der Stromschieneneinheit gegenüberliegend angeordnet sind, um den Schmelzsicherungsabschnitt in beidseitigem Abstand zu flankieren. Dabei verbindet der Schmelzsicherungsabschnitt die beiden Einbettungsabschnitte quer, insbesondere senkrecht, zur Breitenrichtung miteinander. Der Schmelzsicherungsabschnitt kann eine Länge von 5 bis 30 mm, beispielsweise 23 mm, haben. Ein Übergang zwischen jeweils einem der Einbettungsabschnitte und dem Schmelzsicherungsabschnitt kann verrundet sein. An dem Übergang kann das Material des Kernkörpers blank vorliegen. Der Kernkörper kann demgemäß einen Bereich aufweisen, in welchem das Material des Kernkörpers blank vorliegt und welcher die Übergänge sowie den Schmelzsicherungsabschnitt umfasst. Der Bereich kann eine Länge von 6 bis 35 mm, beispielsweise 25 mm, haben. Der Bereich kann eine Breite von 3 bis 10 mm, beispielsweise 5 mm, haben.

Zweckmäßig weist die Stromschieneneinheit wenigstens bereichsweise eine im Wesentlichen gerade und/oder gewellte Formgebung auf.

Zweckmäßig verläuft der Schmelzsicherungsabschnitt im Wesentlichen geradlinig. Alternativ kann der Schmelzsicherungsabschnitt aber auch eine gewundene, gewellte und/oder S-förmige Formgebung aufweisen. Es können mehrere Schmelzsicherungsabschnitte vorhanden sein, die im Abstand zueinander angeordnet sind und die gemeinsam die Einbettungsabschnitte elektrisch parallel und mechanisch miteinander verbinden.

In weiterer Ausgestaltung der Erfindung weist wenigstens einer, insbesondere jeder, der Einbettungsabschnitte wenigstens einen, insbesondere nasen- und/oder zungenförmigen, Vorsprung auf. Dieser Vorsprung ragt in einen zwischen den Einbettungsabschnitten vorhandenen und entlang des Schmelzsicherungsabschnitts verlaufenden Zwischenraum des Kernkörpers. Insbesondere weist der wenigstens eine, insbesondere jeder, der Einbettungsabschnitte zwei derartige Vorsprünge auf, die einander entlang der Breitenrichtung der Stromschieneneinheit gegenüberliegend angeordnet sind. Die Einbettungsabschnitte können als Wärmesenke fungieren. Der Vorsprung kann die vorgenannte Wärmesenkenfunktion fördern. Zudem kann der Vorsprung als Bestandteil des jeweiligen Einbettungsabschnitts in dem Material des Stabilisierungskörpers eingebettet sein, so dass eine mittels des Brückenabschnitts zu durchspannende Distanz zwischen den Einbettungsabschnitten mittels des Vorsprungs verringert werden kann. Insofern kann der Vorsprung die mittels des Brückenabschnitts bewirkte Abstützung der Einbettungsabschnitte gegeneinander verstärken.

In weiterer Ausgestaltung der Erfindung weist die Stromschieneneinheit im Bereich wenigstens eines der beiden Einbettungsabschnitte ein Paar an Positioniervorsprüngen auf, welche einander entlang der Breitenrichtung der Stromschieneneinheit gegenüberliegend angeordnet sind. Insbesondere sind die Positioniervorsprünge zu einer Ausrichtung und/oder Fixierung der Stromschieneneinheit relativ zu dem Batteriezellpaket und/oder relativ zu der Anschlusseinrichtung eingerichtet. Die Ausrichtung und/oder Fixierung mittels der Positioniervorsprünge kann erfolgen, wenn die Stromschieneneinheit zur Herstellung des Batteriepacks an das Batteriezellpaket und/oder die Anschlusseinrichtung gefügt wird. Alternativ oder zusätzlich können die Positioniervorsprünge dazu dienen, die Stromschieneneinheit relativ zu einer Vorrichtung auszurichten, mittels welcher Vorrichtung eine Vormontage erfolgen kann.

In weiterer Ausgestaltung der Erfindung ist ein sich an den ersten Einbettungsabschnitt anschließender erster Kontaktabschnitt des Kernkörpers stoffschlüssig mit der Anschlusseinrichtung verbunden, insbesondere verschweißt oder verlötet. Alternativ oder zusätzlich ist ein sich an den zweiten Einbettungsabschnitt anschließender zweiter Kontaktabschnitt des Kernkörpers stoffschlüssig mit dem Batteriezellpaket oder mit einer elektrisch mit dem Batteriezellpaket verbundenen Leistungselektronik des Batteriepacks verbunden, insbesondere verschweißt oder verlötet. Die Kontaktabschnitte können relativ zur Längsrichtung abgewinkelt sein, um das Batteriezellpaket, insbesondere oberseitig und unterseitig, zu umgreifen. Auf diese Weise lässt sich eine besonders zuverlässige Verbindung, insbesondere zur Erfüllung von Normerfordernissen, erreichen. Ferner kann auf diese Weise eine Stromtragfähigkeit besonders zuverlässig gewährleistet werden. Außerdem kann die stoffschlüssige Verbindung ein vorschnelles und/oder unsachgemäßes Wiederinstandsetzen des Batteriepacks im Falle eines zuvor erfolgten Durchschmelzens oder Durchbrennens des Schmelzsicherungsabschnitts erschweren.

In weiterer Ausgestaltung der Erfindung ist das elektrisch isolierende Material des Stabilisierungskörpers ein, insbesondere flammgeschützter, Kunststoff oder umfasst einen solchen Kunststoff. Alternativ oder zusätzlich sind die beiden Einbettungsabschnitte zu ihrer Einbettung mit dem Kunststoff umlaufend beschichtet. Alternativ oder zusätzlich bildet der Stabilisierungskörper eine Umspritzung der Stromschieneneinheit aus, welche Umspritzung die eingebetteten Einbettungsabschnitte des Kernkörpers umgibt.

Die Einbettungsabschnitte können entlang der Umfangsrichtung der Stromschieneneinheit umlaufend mit dem Kunststoff beschichtet sein. Die Umfangsrichtung kann in einer senkrecht zur Längsrichtung aufgespannten Ebene verlaufen. Eine Dickenrichtung der Stromschieneneinheit kann senkrecht zur Längsrichtung und senkrecht zur Breitenrichtung verlaufen.

Wenigstens eine Hauptkomponente des Kunststoffs kann ausgewählt sein aus der Gruppe Polybutylenterephthalat (PBT), Polyamid (PA) und Polypropylen (PP). Der Kunststoff kann glasfaserverstärkt sein. Beispielsweise kann der Kunststoff 20 bis 40 Gew.-% Glasfasern umfassen. Als besonders geeigneter Kunststoff hat sich PBT GF 30 erwiesen, ein Polybutylenterephthalat mit 30 Gew.-% Glasfaseranteil. Denn PBT GF 30 lässt sich gut verarbeiten und kann zudem normative Erfordernisse an den Flammschutz besonders gut erfüllen.

In weiterer Ausgestaltung der Erfindung springt der Brückenabschnitt entlang der Breitenrichtung der Stromschieneneinheit von dem Schmelzsicherungsabschnitt weg gerichtet vor, insbesondere um einen Betrag des entlang der Breitenrichtung zwischen dem Schmelzsicherungsabschnitt und dem Brückenabschnitt vorhandenen freien Abstands. Der freie Abstand kann 1 bis 10 mm, beispielsweise 1,5 mm, betragen.

In weiterer Ausgestaltung der Erfindung weist der Batteriepack zwei, insbesondere baugleiche, Stromschieneneinheiten auf, die insbesondere an einander gegenüberliegenden Seiten des Batteriepacks angeordnet sind. Insbesondere flankieren die beiden Stromschieneneinheiten das Batteriezellpaket. Mittels der beiden Stromschieneneinheiten kann das Batteriezellpaket, insbesondere polweise, mit der Anschlusseinrichtung elektrisch verbunden sein. Alternativ oder zusätzlich weist der Batteriepack eine zu dem Schmelzsicherungsabschnitt redundante zusätzliche elektrische Sicherungseinrichtung auf, insbesondere wobei die zusätzliche elektrische Sicherungseinrichtung einen elektronischen Leistungsschalter aufweist.

Das erfindungsgemäße System weist ein Batteriegerät, insbesondere Bearbeitungsgerät oder Ladegerät oder Adaptergerät oder Batterietransportgerät, auf. Zudem umfasst das System wenigstens einen erfindungsgemäßen Batteriepack wie voranstehend beschrieben. Insofern übertragen sich die voranstehend angeführten Vorteile des erfindungsgemäßen Batteriepacks auch auf das erfindungsgemäße System. Insbesondere ist der Batteriepack austauschbar an das Batteriegerät elektrisch angeschlossen, um das Batteriegerät mit elektrischer Energie zu versorgen und/oder elektrische Energie von dem Batteriegerät zu beziehen.

Mittels eines erfindungsgemäßen Verfahrens kann eine Stromschieneneinheit für einen erfindungsgemäßen Batteriepack wie vorstehend beschrieben hergestellt werden. Insofern ermöglicht das erfindungsgemäße Verfahren die Ausnutzung der vorstehend angeführten Vorteile des erfindungsgemäßen Batteriepacks. Dabei wird gemäß dem Verfahren der Stabilisierungskörper um den Kernkörper herum urgeformt, insbesondere mit oder aus Kunststoff.

Die Stromschieneneinheit kann durch Umgießen des Kernkörpers mit Gießharz für den Stabilisierungskörper hergestellt werden. Alternativ kann der Kernkörper zur Herstellung der Stromschieneneinheit in ein Gummitauchbecken getaucht werden, um den Stabilisierungskörper auszubilden. Alternativ ist es auch denkbar, Isolierteile für den Stabilisierungskörper gesondert herzustellen, insbesondere spritzzugießen, und diese dann zur Einbettung des Kernkörpers miteinander zu verkleben

In Ausgestaltung der Erfindung weist das Verfahren nachfolgend erläuterte Schritte auf. Gemäß einem Schritt a) erfolgt ein Bereitstellen einer schließbaren Spritzgussform mit einer Kavität, wobei die Kavität eine zu der Formgebung des Stabilisierungskörpers komplementäre Negativkontur aufweist. Gemäß einem weiteren Schritt b) des Verfahrens wird der Kernkörper an und/oder in der geöffneten Spritzgussform positioniert. Gemäß einem weiteren Schritt c) des Verfahrens erfolgt ein Schließen der Spritzgussform, um den Kernkörper innerhalb der Kavität der Spritzgussform derart anzuordnen, insbesondere einzuspannen, dass der Schmelzsicherungsabschnitt maskiert wird. Gemäß einem weiteren Schritt d) des Verfahrens erfolgt ein Spritzgießen des Stabilisierungskörpers, wobei der Kernkörper abseits seines Schmelzsicherungsabschnitts mit dem Material des Stabilisierungskörpers umspritzt wird, um die beiden Einbettungsabschnitte in dem Material des Stabilisierungskörpers einzubetten.

Zweckmäßig kann zeitlich vor Durchführung des Schritts a) ein Trennbearbeiten, insbesondere Stanzen, und/oder Umformen des Kernkörpers erfolgen. Alternativ oder zusätzlich kann die Stromschieneneinheit zeitlich nach Durchführung von Schritt d) umformend und/oder trennend bearbeitet werden.

Zweckmäßig kann der erfindungsgemäße Batteriepack hergestellt werden, indem sein Batteriezellpaket oder eine mit dem Batteriezellpaket elektrisch verbundene Leistungselektronik des Batteriepacks mittels der nach dem Verfahren hergestellten Stromschieneneinheit mit der Anschlusseinrichtung des Batteriepacks elektrisch verbunden wird.

### KURZBESCHREIBUNG DER ZEICHNUNGEN

Weitere Vorteile und Merkmale der Erfindung ergeben sich aus den Ansprüchen sowie aus der nachfolgenden Beschreibung eines bevorzugten Ausführungsbeispiels der Erfindung, welches anhand der Zeichnungen dargestellt ist. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in schematischer Seitenansicht eine Ausführungsform eines erfindungsgemäßen Systems mit einer Ausführungsform eines erfindungsgemäßen Batteriepacks,
- Fig. 2: in schematischer Perspektivdarstellung den Batteriepack nach Fig. 1 mit einer erfindungsgemäß hergestellten Stromschieneneinheit,

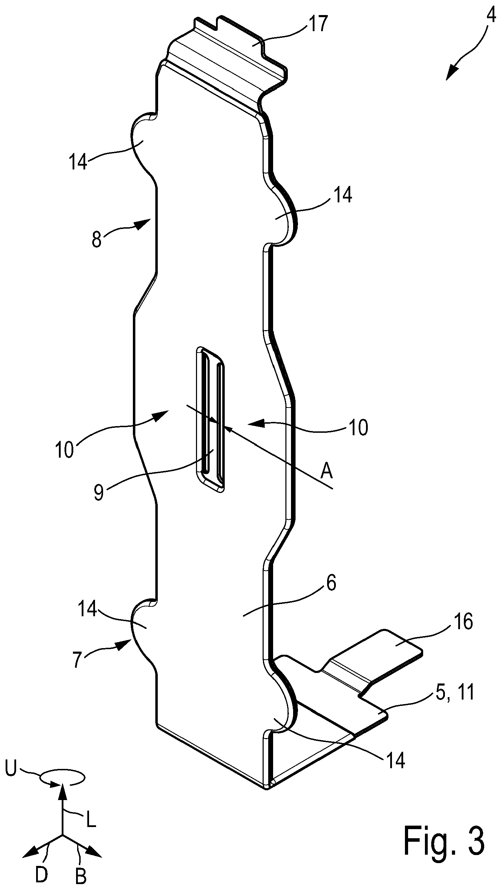

- Fig. 3: in schematischer Perspektivdarstellung gesondert die Stromschieneneinheit des Batteriepacks nach Fig. 2,

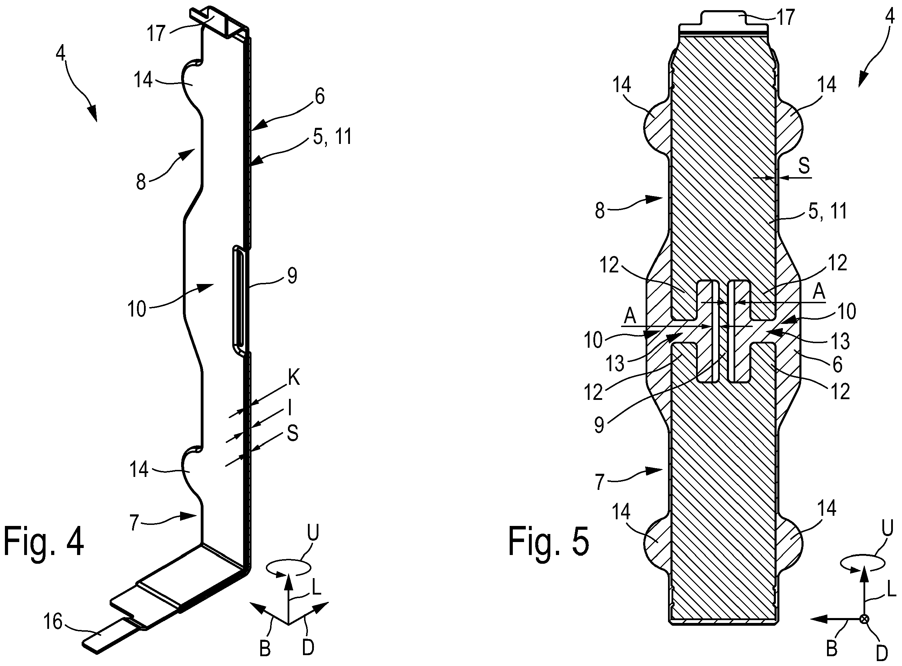

- Fig. 4: in schematischer Perspektivdarstellung geschnitten die Stromschieneneinheit nach Fig. 3,
- Fig. 5: in schematischer Schnittdarstellung die Stromschieneneinheit nach den Fig. 3 und 4,

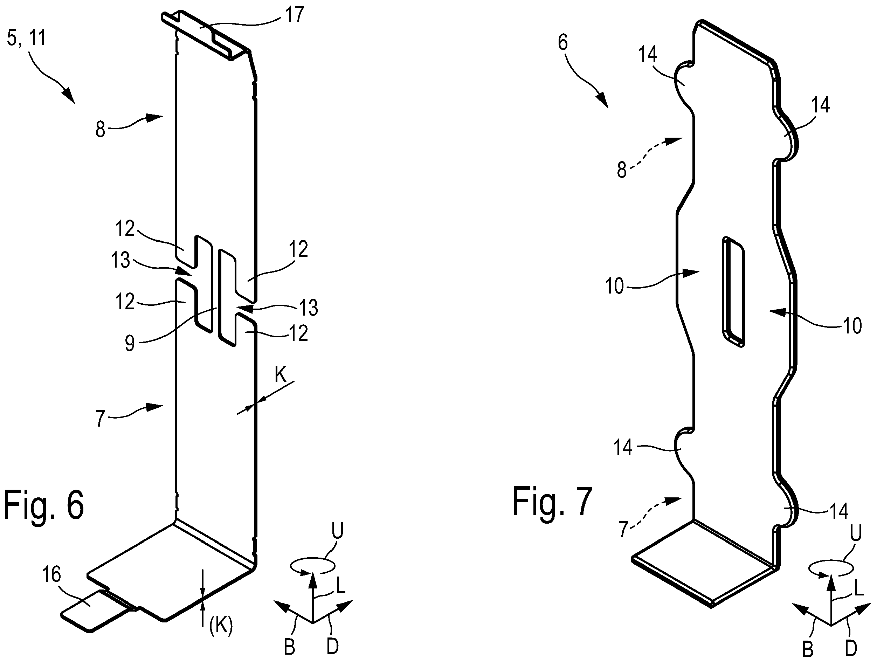

- Fig. 6: in schematischer Perspektivdarstellung einen Kernkörper der Stromschieneneinheit nach den Fig. 3 bis 5 und
- Fig. 7: in schematischer Perspektivdarstellung einen Stabilisierungskörper der Stromschieneneinheit nach den Fig. 3 bis 5.

### DETAILLIERTE BESCHREIBUNG DER AUSFÜHRUNGSBEISPIELE

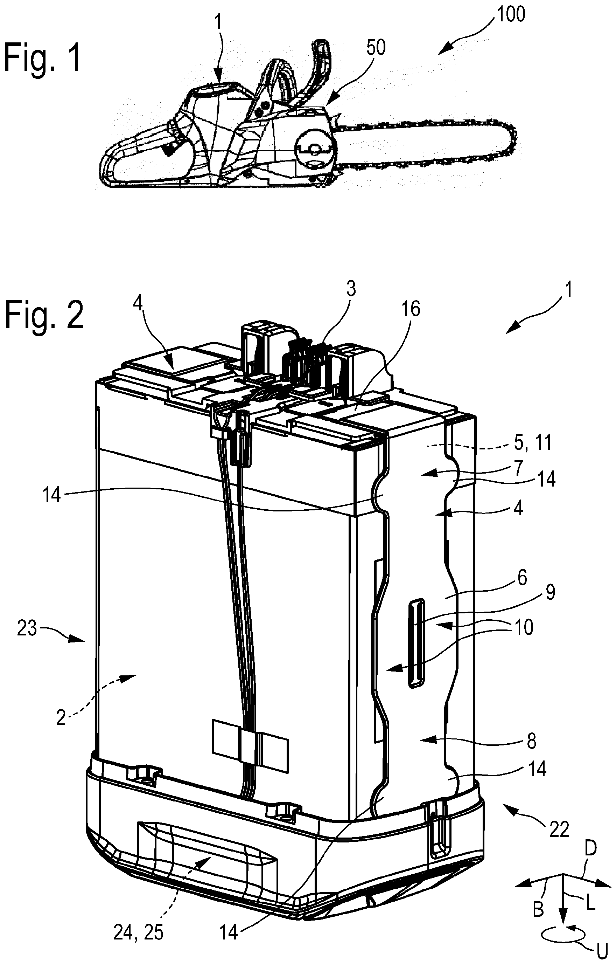

Ein erfindungsgemäßes System 100 weist ein Batteriegerät 50 auf. Das Batteriegerät 50 kann als Bearbeitungsgerät oder Ladegerät oder Adaptergerät oder Batterietransportgerät ausgebildet sein. Gemäß Fig. 1 ist das Batteriegerät 50 beispielsweise als Bearbeitungsgerät, vorliegend als Kettensäge, ausgebildet. Das System 100 hat außerdem wenigstens einen Batteriepack 1. Dabei ist der Batteriepack 1 beispielsweise austauschbar an das Batteriegerät 50 elektrisch angeschlossen, um das Batteriegerät 50 mit elektrischer Energie zu versorgen.

Alternativ oder zusätzlich kann der Batteriepack 1 an das Batteriegerät 50 elektrisch angeschlossen sein, um elektrische Energie von dem Batteriegerät 50 zu beziehen.

Der Batteriepack 1 weist ein Batteriezellpaket 2 zum Speichern elektrischer Energie auf. Zudem umfasst der Batteriepack 1 eine Anschlusseinrichtung 3 zum elektrischen Anschließen des Batteriepacks 1 an das Batteriegerät 50. Außerdem hat der Batteriepack 1 wenigstens eine elektrische Stromschieneneinheit 4, die das Batteriezellpaket 2 elektrisch mit der Anschlusseinrichtung 3 verbindet. Vorliegend sind zwei elektrische Stromschieneneinheiten 4 vorhanden, die beispielsweise baugleich ausgebildet sind. Die beiden Stromschieneneinheiten 4 sind an einander gegenüberliegenden Seiten 22, 23 des Batteriepacks 1 angeordnet, um das Batteriezellpaket 2 zu flankieren.

Die Stromschieneneinheit 4 weist einen elektrisch leitfähigen Kernkörper 5 sowie einen elektrisch isolierenden Stabilisierungskörper 6 mit oder aus elektrisch isolierendem Material auf. Dabei hat der Kernkörper 5 einen der Anschlusseinrichtung 3 zugewandten ersten Einbettungsabschnitt 7 und einen von dem ersten Einbettungsabschnitt 7 abgewandten zweiten Einbettungsabschnitt 8. Der Kernkörper 5 weist außerdem einen relativ zu den beiden Einbettungsabschnitten 7, 8 querschnittreduzierten Schmelzsicherungsabschnitt 9 auf, durch den die beiden Einbettungsabschnitte 7, 8 miteinander elektrisch und mechanisch verbunden sind. Die beiden Einbettungsabschnitte 7, 8 sind jeweils in dem elektrisch isolierenden Material des Stabilisierungskörpers 6 eingebettet. Der Stabilisierungskörper 6 weist wenigstens einen Brückenabschnitt 10 auf, der in einem Abstand A von dem Schmelzsicherungsabschnitt 9 zwischen den beiden Einbettungsabschnitten 7, 8 erstreckt ist, um die beiden eingebetteten Einbettungsabschnitte 7, 8 zusätzlich zu ihrer Verbindung durch den Schmelzsicherungsabschnitt 9 mechanisch gegeneinander abzustützen.

Der Batteriepack 1 kann eine zu dem Schmelzsicherungsabschnitt 9 redundante zusätzliche elektrische Sicherungseinrichtung 24 aufweisen. Dabei kann die zusätzliche elektrische Sicherungseinrichtung 24 einen öffnungsfähigen elektronischen Leistungsschalter 25 umfassen. Die elektrische Stromschieneneinheit 4 kann mittels des Leistungsschalters 25 des Batteriepacks 1 mit dem Batteriezellpaket 2 elektrisch verbunden sein. Der Leistungsschalter 25 kann Bestandteil einer Leistungselektronik des Batteriepacks 1 sein.

Vorliegend weist der Stabilisierungskörper 6 zwei Brückenabschnitte 10 auf, die einander entlang einer Breitenrichtung B der Stromschieneneinheit 4 gegenüberliegend angeordnet sind, um den Schmelzsicherungsabschnitt 9 in beidseitigem Abstand A zu flankieren. Dabei verbindet der Schmelzsicherungsabschnitt 9 die beiden Einbettungsabschnitte 7, 8 quer, insbesondere senkrecht, zu einer Breitenrichtung B der Stromschieneneinheit 4 miteinander. Der Schmelzsicherungsabschnitt 9 ist vorliegend entlang der Breitenrichtung B zwischen den beiden Brückenabschnitten 10 angeordnet.

Die eingebetteten Einbettungsabschnitte 7, 8 stehen in unmittelbarer und/oder direkter Berührung mit dem Material des Stabilisierungskörpers 6, d.h. der Stabilisierungskörper 6 ist an den Einbettungsabschnitten 7, 8 unmittelbar bzw. direkt angelegt. Insbesondere sind der Stabilisierungskörper 6 und die Einbettungsabschnitte 7, 8 adhäsiv und/oder formschlüssig miteinander verbunden.

Der, vorliegend integrale, Schmelzsicherungsabschnitt 9 bildet beispielsweise eine Sollbruchstelle des Kernkörpers 5 zum selbsttätigen Unterbrechen eines durch den Kernkörper 5 ausgebildeten elektrischen Leitungspfads bei Überlast aus. Insbesondere ist der Schmelzsicherungsabschnitt 9 zur selbsttätigen Unterbrechung des Leitungspfads bei einer elektrischen Stromstärke von 100 A bis 2.000 A, insbesondere von etwa 150 A, ausgebildet.

Vorliegend hat der Kernkörper 5 abseits seines Schmelzsicherungsabschnitts 9, insbesondere in den Einbettungsabschnitten 7, 8, einen Leitungsquerschnitt, der größer ist als der Leitungsquerschnitt im Schmelzsicherungsabschnitt 9. Der Leitungsquerschnitt kann im Schmelzsicherungsabschnitt 9 auf ein 0,05- bis 0,5-Faches, insbesondere auf ein 0,1-Faches, des außerhalb oder abseits des Schmelzsicherungsabschnitts 9 engsten Leitungsquerschnitts des Kernkörpers 5 reduziert, insbesondere verjüngt, sein. Der außerhalb des Schmelzsicherungsabschnitts 9 engste Leitungsquerschnitt des Kernkörpers 5 kann 2,4 mm² bis 30 mm², beispielsweise 10 mm², betragen.

Der Kernkörper 5 weist beispielsweise ein elektrisch leitfähiges Material auf, welches an dem Schmelzsicherungsabschnitt 9 blank vorliegt. Dabei ist der Kernkörper 5 beispielsweise als Blechteil 11 ausgebildet, insbesondere wobei das Material des Kernkörpers 5 ein Kupferblech ist oder ein Kupferblech aufweist. Das Kupferblech umfasst oder besteht beispielsweise aus einer Kupferlegierung mit wenigstens 50 Gew.-% Cu. Das Kupferblech kann verzinnt sein.

Beispielsweise ist der Kernkörper 5 von seinem ersten Einbettungsabschnitt 7 zu seinem zweiten Einbettungsabschnitt 8 entlang einer Längsrichtung L der Stromschieneneinheit 4 längserstreckt. Dabei ist der Kernkörper 5 quer zu der Längsrichtung L entlang der Breitenrichtung B der Stromschieneneinheit 4 quer erstreckt. Der Kernkörper 5 weist vorliegend senkrecht zur Längsrichtung L und senkrecht zur Breitenrichtung B wenigstens bereichsweise eine, insbesondere einheitliche, Kerndicke K auf. Die Kerndicke K beträgt beispielsweise 0,3 mm bis 1,0 mm, insbesondere 0,5 mm.

Vorliegend ist die Stromschieneneinheit 4 wenigstens bereichsweise flächig oder ebenförmig ausgebildet. Dabei ist die wenigstens bereichsweise flächig ausgebildete Stromschieneneinheit 4 wenigstens bereichsweise an das Batteriezellpaket 2 angelegt.

Der Batteriepack 1 weist beispielsweise eine im Wesentlichen allgemein zylindrisch, insbesondere prismatische, vorliegend quaderförmige, Formgebung auf. Vorliegend ist die Längsrichtung L von einer im Wesentlichen rechteckigen Unterseite zu einer im Wesentlichen rechteckigen der Unterseite gegenüberliegenden Oberseite des Batteriepacks 1 erstreckt. "Im Wesentlichen rechteckig" bezieht sich dabei darauf, dass beispielsweise Ecken der Unterseite bzw. der Oberseite verrundet sein können. Eine maximale Breite der Stromschieneneinheit 4 ist beispielsweise kleiner als die Breite der Seiten 22, 23 des Batteriepacks 1.

Der Stabilisierungskörper 6 weist vorliegend senkrecht zur Längsrichtung L und senkrecht zur Breitenrichtung B wenigstens bereichsweise eine Dicke I auf. Die Dicke I ist beispielsweise 1-mal bis 5-mal, insbesondere 3-mal, so groß wie die Kerndicke K des Kernkörpers 5. Dabei ist eine Schichtdicke S des Materials des Stabilisierungskörpers 6 an den Einbettungsabschnitten 7, 8 des Kernkörpers 5 beispielsweise betragsmäßig in etwa gleich der Kerndicke K. Die Dicke I entspricht im Brückenabschnitt 10 beispielsweise einer Materialstärke und setzt sich in den Einbettungsabschnitten 7, 8 zusammen aus der Kerndicke K sowie der doppelten Schichtdicke S.

Beispielsweise weist der Schmelzsicherungsabschnitt 9 eine Länge von 5 mm bis 30 mm, vorliegend 23 mm, auf. Ein Übergang zwischen jeweils einem der Einbettungsabschnitte 7, 8 und dem Schmelzsicherungsabschnitt 9 kann verrundet ausgebildet sein. An dem Übergang kann das Material des Kernkörpers 5 blank vorliegen. Der Kernkörper 5 kann demgemäß einen Bereich aufweisen, an welchem das Material des Kernkörpers 5 blank vorliegt und welcher die Übergänge sowie den Schmelzsicherungsabschnitt 9 umfasst. Der Bereich kann eine Länge von 6 mm bis 35 mm, vorliegend 25 mm, haben. Der Bereich kann eine Breite von 3 mm bis 10 mm, vorliegend 5 mm, haben.

Beispielsweise weist wenigstens einer, vorliegend jeder, der Einbettungsabschnitte 7, 8 wenigstens einen, insbesondere nasen- oder zungenförmigen, Vorsprung 12 auf. Der Vorsprung 12 ragt in einen zwischen den Einbettungsabschnitten 7, 8 vorhandenen und entlang des Schmelzsicherungsabschnitts 9 verlaufenden Zwischenraum 13 des Kernkörpers 5. Dabei weist der wenigstens eine, vorliegend jeder, der Einbettungsabschnitte 7, 8 zwei Vorsprünge 12 auf, die einander entlang der Breitenrichtung B der Stromschieneneinheit 4 gegenüberliegend angeordnet sind.

Die Einbettungsabschnitte 7, 8 können als Wärmesenke fungieren. Der Vorsprung 12 kann die Wärmesenkenfunktion der Einbettungsabschnitte 7, 8 verstärken. Zudem kann der Vorsprung 12 als Bestandteil des jeweiligen Einbettungsabschnitts 7, 8 in dem Material des Stabilisierungskörpers 6 eingebettet sein, so dass eine mittels des Brückenabschnitts 10 zu durchspannende Distanz zwischen den Einbettungsabschnitten 7, 8 mittels des Vorsprungs 12 verringert werden kann. Insofern kann der Vorsprung 12 die mittels des Brückenabschnitts 10 bewirkte Abstützung der Einbettungsabschnitte 7, 8 gegeneinander verbessern.

Die Stromschieneneinheit 4 kann im Bereich wenigstens eines der beiden Einbettungsabschnitte 7, 8 ein Paar an Positioniervorsprüngen 14 aufweisen. Die Positioniervorsprünge 14 des Paars können einander entlang der Breitenrichtung B der Stromschieneneinheit 4 gegenüberliegend angeordnet sein. Vorliegend weisen beide Einbettungsabschnitte 7, 8 ein derartiges Paar an Positioniervorsprüngen 14 auf. Dabei sind die Positioniervorsprünge 14 beispielsweise zu einer Ausrichtung und/oder Fixierung der Stromschieneneinheit 4 relativ zu dem Batteriezellenpaket 2 sowie - alternativ oder zusätzlich - relativ zu der Anschlusseinrichtung 3 eingerichtet.

Beispielsweise ist ein sich an den ersten Einbettungsabschnitt 7 anschließender erster Kontaktabschnitt 16 des Kernkörpers 5 stoffschlüssig mit der Anschlusseinrichtung 3 verbunden. Alternativ oder zusätzlich ist ein sich an den zweiten Einbettungsabschnitt 8 anschließender zweiter Kontaktabschnitt 17 des Kernkörpers 5 stoffschlüssig mit dem Batteriezellenpaket 2 oder mit einer elektrisch mit dem Batteriezellenpaket 2 verbundenen Leistungselektronik des Batteriepacks 1 verbunden. Die stoffschlüssige Verbindung des ersten Kontaktabschnitts 16 mit der Anschlusseinrichtung 3 kann durch Verschweißen oder Verlöten erzeugt sein. Die stoffschlüssige Verbindung des zweiten Kontaktabschnitts 17 mit dem Batteriezellpaket 2 oder mit der Leistungselektronik des Batteriepacks 1 kann durch Verschweißen oder Verlöten erzeugt sein. Die Kontaktabschnitte 16, 17 können wie vorliegend relativ zu der Längsrichtung L abgewinkelt sein, um das Batteriezellpaket 2, insbesondere oberseitig und unterseitig, zu umgreifen.

Beispielsweise umfasst das elektrisch isolierende Material des Stabilisierungskörpers 6 einen, insbesondere flammgeschützten, Kunststoff oder besteht aus einem solchen Kunststoff. Alternativ oder zusätzlich sind die beiden Einbettungsabschnitte 7, 8 zu ihrer Einbettung mit dem Kunststoff umlaufend beschichtet. Alternativ oder zusätzlich bildet der Stabilisierungskörper 6 eine Umspritzung der Stromschieneneinheit 4 aus, wobei die Umspritzung die eingebetteten Einbettungsabschnitte 7, 8 des Kernkörpers 5 umgibt.

Die Einbettungsabschnitte 7, 8 sind vorliegend entlang einer Umfangsrichtung U der Stromschieneneinheit 4 umlaufend mit dem Kunststoff beschichtet. Die Umfangsrichtung U verläuft in einer senkrecht zu der Längsrichtung L aufgespannten Ebene. Eine Dickenrichtung D der Stromschieneneinheit 4 verläuft senkrecht zu der Längsrichtung L und senkrecht zu der Breitenrichtung B.

Der Kunststoff, insbesondere seine Hauptkomponente, kann ausgewählt sein aus der Gruppe Polybutylenterephthalat (PBT), Polyamid (PA) und Polypropylen (PP). Beispielsweise ist der Kunststoff glasfaserverstärkt. Beispielsweise kann der Kunststoff 20 bis 40 Gew.-% Glasfasern umfassen. Vorliegend ist der Kunststoff ein PBT GF 30, also ein Polybutylenterephthalat mit 30 Gew.-% Glasfaseranteil.

Vorliegend springt der Brückenabschnitt 10 entlang der Breitenrichtung B der Stromschieneneinheit 4 von dem Schmelzsicherungsabschnitt 9 weg gerichtet vor. Beispielsweise springt der Brückenabschnitt 10 entlang der Breitenrichtung B um einen Betrag des entlang der Breitenrichtung B zwischen dem Schmelzsicherungsabschnitt 9 und dem Brückenabschnitt 10 vorhandenen freien Abstands A vor. Der Abstand A kann 1 mm bis 10 mm, beispielsweise 1,5 mm, betragen.

Die Stromschieneneinheit 4 des Batteriepacks 1 ist vorliegend mittels eines Verfahrens hergestellt, gemäß welchem der Stabilisierungskörper 6 um den Kernkörper 5 herum urgeformt wird. Beispielsweise wird der Stabilisierungskörper 6 um den Kernkörper 5 herum mit oder aus einem Kunststoff urgeformt. Der Kernkörper 5 kann durch Gießen eines Kunstharzes hergestellt werden. Alternativ kann der Stabilisierungskörper 6 durch Eintauchen des Kernkörpers 5 in ein Gummitauchbecken aus einem Gummiwerkstoff hergestellt werden. Prinzipiell ist es auch denkbar, mehrere Isolierteile des Stabilisierungskörpers 6 im Voraus urformend, beispielsweise spritzgießend, herzustellen und bei einbettender Anordnung an dem Kernkörper 5 miteinander zu verkleben.

Beispielsweise wird der Stabilisierungskörper 6 aber spritzgegossen. Dabei kann das Verfahren einen ersten Schritt a) aufweisen, gemäß welchem eine schließbare Spritzgussform mit einer Kavität bereitgestellt wird, wobei die Kavität eine zur Formgebung des Stabilisierungskörpers 6 komplementäre Negativkontur aufweist. Das Verfahren kann zudem einen Schritt b) aufweisen, gemäß welchem der Kernkörper 5 in/an der geöffneten Spritzgussform positioniert wird. Es kann ein weiterer Schritt c) des Verfahrens folgen, gemäß welchem die Spritzgussform geschlossen wird, um den Kernkörper 5 innerhalb der Kavität der Spritzgussform derart anzuordnen, insbesondere einzuspannen, dass der Schmelzsicherungsabschnitt 9 maskiert wird. Ferner kann das Verfahren einen Schritt d) aufweisen, gemäß welchem der Stabilisierungskörper 6 spritzgegossen wird, wobei der Kernkörper 5 abseits seines Schmelzsicherungsabschnitts 9 mit dem Material des Stabilisierungskörpers 6 umspritzt wird, um die beiden Einbettungsabschnitte 7, 8 in dem Material des Stabilisierungskörpers 6 einzubetten.

Beispielsweise kann zeitlich vor der Durchführung von Schritt a) eine trennende Bearbeitung, beispielsweise in Form von Stanzen, und ein Umformen des Kernkörpers 5 erfolgen.

Der erfindungsgemäße Batteriepack 1 kann hergestellt werden, indem sein Batteriezellpaket 2 oder eine mit dem Batteriezellpaket 2 elektrisch verbundene Leistungselektronik des Batteriepacks 1 mittels der nach dem vorstehend erläuterten Verfahren hergestellten Stromschieneneinheit 4 mit der Anschlusseinrichtung 3 des Batteriepacks 1 elektrisch verbunden wird.

## Patentansprüche

1. Batteriepack (1) für ein Batteriegerät (50), insbesondere Bearbeitungsgerät oder Ladegerät oder Adaptergerät oder Batterietransportgerät, wobei der Batteriepack (1) aufweist:
- ein Batteriezellpaket (2) zum Speichern elektrischer Energie,
- eine Anschlusseinrichtung (3) zum elektrischen Anschließen des Batteriepacks (1) an das Batteriegerät (50), und
- wenigstens eine elektrische Stromschieneneinheit (4), die das Batteriezellpaket (2) elektrisch mit der Anschlusseinrichtung (3) verbindet,
- wobei die Stromschieneneinheit (4) einen elektrisch leitfähigen Kernkörper (5) sowie einen elektrisch isolierenden Stabilisierungskörper (6) mit oder aus elektrisch isolierendem Material aufweist,
- wobei der Kernkörper (5) einen der Anschlusseinrichtung (3) zugewandten ersten Einbettungsabschnitt (7) und einen von dem ersten Einbettungsabschnitt (7) abgewandten zweiten Einbettungsabschnitt (8) aufweist,
- wobei der Kernkörper (5) einen relativ zu den beiden Einbettungsabschnitten (7, 8) querschnittreduzierten Schmelzsicherungsabschnitt (9) aufweist, durch den die beiden Einbettungsabschnitte (7, 8) miteinander elektrisch und mechanisch verbunden sind,
- wobei die beiden Einbettungsabschnitte (7, 8) jeweils in dem elektrisch isolierenden Material des Stabilisierungskörpers (6) eingebettet sind, und
- wobei der Stabilisierungskörper (6) wenigstens einen Brückenabschnitt (10) aufweist, der in einem Abstand (A) von dem Schmelzsicherungsabschnitt (9) zwischen den beiden Einbettungsabschnitten (7, 8) erstreckt ist, um die beiden eingebetteten Einbettungsabschnitte (7, 8) zusätzlich zu ihrer Verbindung durch den Schmelzsicherungsabschnitt (9) mechanisch gegeneinander abzustützen.

2. Batteriepack (1) nach dem vorhergehenden Anspruch,
- wobei ein elektrisch leitfähiges Material des Kernkörpers (5) an seinem Schmelzsicherungsabschnitt (9) blank vorliegt,
- insbesondere wobei der Kernkörper (5) als Blechteil (11) ausgebildet ist, insbesondere wobei sein Material ein Kupferblech ist oder aufweist.

3. Batteriepack (1) nach einem der vorhergehenden Ansprüche,
- wobei der Kernkörper (5) von seinem ersten Einbettungsabschnitt (7) zu seinem zweiten Einbettungsabschnitt (8) entlang einer Längsrichtung (L) der Stromschieneneinheit (4) längserstreckt ist,
- wobei der Kernkörper (5) quer zur Längsrichtung (L) entlang einer Breitenrichtung (B) der Stromschieneneinheit (4) quererstreckt ist,
- wobei der Kernkörper (5) senkrecht zur Längsrichtung (L) und senkrecht zur Breitenrichtung (B) eine, insbesondere einheitliche, Kerndicke (K) aufweist, insbesondere wobei die Kerndicke (K) 0,3 mm bis 1,0 mm, insbesondere 0,5 mm, beträgt.

4. Batteriepack (1) nach einem der vorhergehenden Ansprüche,
- wobei die Stromschieneneinheit (4) wenigstens bereichsweise flächig ausgebildet ist und wenigstens bereichsweise an das Batteriezellpaket (2) angelegt ist.

5. Batteriepack (1) nach einem der vorhergehenden Ansprüche, insbesondere nach Anspruch 3,
wobei der Stabilisierungskörper (6) senkrecht zur Längsrichtung (L) und senkrecht zur Breitenrichtung (B) eine Dicke (I) aufweist, welche Dicke (I) 1-mal bis 5-mal, insbesondere 3-mal, so groß ist wie die Kerndicke (K).

6. Batteriepack (1) nach einem der vorhergehenden Ansprüche,
- wobei der Stabilisierungskörper (6) zwei Brückenabschnitte (10) aufweist, die einander gegenüberliegend entlang einer Breitenrichtung (B) der Stromschieneneinheit (4) angeordnet sind, um den Schmelzsicherungsabschnitt (9) in beidseitigem Abstand (A) zu flankieren,
- wobei der Schmelzsicherungsabschnitt (9) die beiden Einbettungsabschnitte (7, 8) quer, insbesondere senkrecht, zur Breitenrichtung (B) miteinander verbindet.

7. Batteriepack (1) nach einem der vorhergehenden Ansprüche,
- wobei wenigstens einer, insbesondere jeder, der Einbettungsabschnitte (7, 8) wenigstens einen, insbesondere nasen- oder zungenförmigen, Vorsprung (12) aufweist, welcher Vorsprung (12) in einen zwischen den Einbettungsabschnitten (7, 8) vorhandenen und entlang des Schmelzsicherungsabschnitts (9) verlaufenden Zwischenraum (13) des Kernkörpers (5) ragt,
- insbesondere wobei der wenigstens eine, insbesondere jeder, der Einbettungsabschnitte (7, 8) zwei Vorsprünge (12) aufweist, die einander entlang einer Breitenrichtung (B) der Stromschieneneinheit (4) gegenüberliegend angeordnet sind.

8. Batteriepack (1) nach einem der vorhergehenden Ansprüche,
- wobei die Stromschieneneinheit (4) im Bereich wenigstens eines der beiden Einbettungsabschnitte (7, 8) ein Paar an Positioniervorsprüngen (14) aufweist, welche einander entlang einer Breitenrichtung (B) der Stromschieneneinheit (4) gegenüberliegend angeordnet sind,
- insbesondere wobei die Positioniervorsprünge (14) zu einer Ausrichtung und/oder Fixierung der Stromschieneneinheit (4) relativ zu dem Batteriezellpaket (2) und/oder relativ zu der Anschlusseinrichtung (3) eingerichtet sind.

9. Batteriepack (1) nach einem der vorhergehenden Ansprüche,
- wobei ein sich an den ersten Einbettungsabschnitt (7) anschließender erster Kontaktabschnitt (16) des Kernkörpers (5) stoffschlüssig mit der Anschlusseinrichtung (3) verbunden, insbesondere verschweißt oder verlötet, ist, und/oder
- wobei ein sich an den zweiten Einbettungsabschnitt (8) anschließender zweiter Kontaktabschnitt (17) des Kernkörpers (5) stoffschlüssig mit dem Batteriezellpaket (2) oder mit einer elektrisch mit dem Batteriezellpaket (2) verbundenen Leistungselektronik des Batteriepacks (1) verbunden, insbesondere verschweißt oder verlötet, ist.

10. Batteriepack (1) nach einem der vorhergehenden Ansprüche,
- wobei das elektrisch isolierende Material des Stabilisierungskörpers (6) ein, insbesondere flammgeschützter, Kunststoff ist oder einen solchen Kunststoff umfasst, und/oder
- wobei die beiden Einbettungsabschnitte (7, 8) zu ihrer Einbettung mit dem Kunststoff umlaufend beschichtet sind, und/oder
- wobei der Stabilisierungskörper (6) eine Umspritzung der Stromschieneneinheit (4) ausbildet, welche Umspritzung die eingebetteten Einbettungsabschnitte (7, 8) des Kernkörpers (5) umgibt.

11. Batteriepack (1) nach einem der vorhergehenden Ansprüche,
wobei der Brückenabschnitt (10) entlang einer Breitenrichtung (B) der Stromschieneneinheit (4) von dem Schmelzsicherungsabschnitt (9) weg gerichtet vorspringt, insbesondere um einen Betrag des entlang der Breitenrichtung (B) zwischen dem Schmelzsicherungsabschnitt (9) und dem Brückenabschnitt (10) vorhandenen freien Abstands (A).

12. Batteriepack (1) nach einem der vorhergehenden Ansprüche,
- wobei der Batteriepack (1) zwei, insbesondere baugleiche, Stromschieneneinheiten (4) aufweist, die insbesondere an einander gegenüberliegenden Seiten (22, 23) des Batteriepacks (1) angeordnet sind, um das Batteriezellpaket (2) zu flankieren; und/oder
- wobei der Batteriepack (1) eine zum Schmelzsicherungsabschnitt (9) redundante zusätzliche elektrische Sicherungseinrichtung (24) aufweist, insbesondere wobei die zusätzliche elektrische Sicherungseinrichtung (24) einen elektronischen Leistungsschalter (25) aufweist.

13. System (100), welches aufweist:
- ein Batteriegerät (50), insbesondere Bearbeitungsgerät oder Ladegerät oder Adaptergerät oder Batterietransportgerät, und
- wenigstens einen Batteriepack (1) nach einem der vorhergehenden Ansprüche,
- insbesondere wobei der Batteriepack (1) austauschbar an das Batteriegerät (50) elektrisch angeschlossen ist, um das Batteriegerät (50) mit elektrischer Energie zu versorgen und/oder elektrische Energie von dem Batteriegerät (50) zu beziehen.

14. Verfahren zum Herstellen einer Stromschieneneinheit (4) für einen Batteriepack (1) nach einem der vorhergehenden Ansprüche,
wobei der Stabilisierungskörper (6) um den Kernkörper (5) herum urgeformt wird, insbesondere mit oder aus Kunststoff.

15. Verfahren nach dem vorhergehenden Anspruch,
wobei das Verfahren nachfolgende Schritte aufweist:
a) Bereitstellen einer schließbaren Spritzgussform mit einer Kavität, wobei die Kavität eine zur Formgebung des Stabilisierungskörpers (6) komplementäre Negativkontur aufweist;
b) Positionieren des Kernkörpers (5) an/in der geöffneten Spritzgussform,
c) Schließen der Spritzgussform, um den Kernkörper (5) innerhalb der Kavität der Spritzgussform derart anzuordnen, insbesondere einzuspannen, dass der Schmelzsicherungsabschnitt (9) maskiert wird;
d) Spritzgießen des Stabilisierungskörpers (6), wobei der Kernkörper (5) abseits seines Schmelzsicherungsabschnitts (9) mit dem Material des Stabilisierungskörpers (6) umspritzt wird, um die beiden Einbettungsabschnitte (7, 8) in dem Material des Stabilisierungskörpers (6) einzubetten.
